# FASCICULE DE BREVET EUROPEEN

(11) **EP 4 273 470 B1**
(45) Date de publication et mention de la délivrance du brevet: **12.02.2025**
(21) Numéro de dépôt: 23171104.5
(22) Date de dépôt: 02.05.2023
(51) Int. Cl.: F25B 15/00, F25B 39/00, F25B 33/00, F28F 13/18, B05D 3/00, C23C 20/00

(54) **ÉCHANGEUR THERMIQUE ET PROCÉDÉ DE TRAITEMENT DE SURFACE D'UN ÉCHANGEUR THERMIQUE POUR AMÉLIORER LA PERFORMANCE D'UN SYSTÈME THERMODYNAMIQUE AVEC CYCLE À ABSORPTION**
WÄRMETAUSCHER UND VERFAHREN ZUR OBERFLÄCHENBEHANDLUNG EINES WÄRMETAUSCHERS ZUR VERBESSERUNG DER LEISTUNG EINES THERMODYNAMISCHEN SYSTEMS MIT ABSORPTIONSZYKLUS
HEAT EXCHANGER AND METHOD OF TREATING A SURFACE OF A HEAT ECHANGER FOR IMPROVING PERFORMANCE OF A THERMODYNAMIC SYSTEM WITH ABSORPTION CYCLE

(30) Priorité: 06.05.2022 FR 2204327
(43) Date de publication de la demande: 08.11.2023
(73) Titulaire: Commissariat à l'Energie Atomique et aux Energies Alternatives, 75015 Paris (FR)
(72) Inventeur: PAGET, Baptiste, Grenoble (FR); PHAN, Hai Trieu, Grenoble (FR); PONCELET, Olivier, Grenoble (FR)
(74) Mandataire: Brevalex

(56) Documents cités:
- EP-A1- 2 130 943
- JP-A- H06 123 577
- US-A1- 2010 247 931

## Description

### DOMAINE TECHNIQUE

La présente invention se rapporte au domaine général des systèmes thermodynamiques avec cycle à absorption.

L'invention concerne un échangeur thermique pour une machine à absorption.

L'invention concerne également une machine à absorption comprenant un ou plusieurs échangeurs thermiques.

L'invention concerne également un procédé pour améliorer les performances d'un échangeur thermique pour une machine à absorption.

L'invention trouve des applications dans de nombreux domaines industriels, et notamment pour la fabrication d'absorbeur et/ou de générateur de machine à absorption.

L'invention est particulièrement intéressante puisqu'elle conduit à de très bonnes efficacités de transferts de masse et de chaleur lors des processus d'absorption et de désorption, améliorant ainsi la performance globale du cycle.

### ÉTAT DE LA TECHNIQUE ANTÉRIEURE

Actuellement, la valorisation de la chaleur industrielle et l'optimisation des consommations provenant du résidentiel sont essentielles pour assurer la transition écologique. Les politiques énergétiques actuelles soulignent l'importance de la gestion des échanges thermiques (froids ou chauds), dans les immeubles, les industries et même dans les zones urbaines.

Les systèmes thermodynamiques avec cycle à absorption permettent par exemple de produire du froid à partir d'une source chaude (circuit frigorifique) ou encore d'obtenir une pompe à chaleur. Ces machines à absorption sont intéressantes car elles utilisent comme source de la chaleur à moyenne/haute température, provenant du solaire ou des rejets de procédés industriels, au lieu de l'énergie électrique, qui est une source est précieuse et coûteuse.

Ainsi, il est intéressant de coupler une machine à absorption avec des systèmes solaires thermiques, des réseaux de chaleur, des usines industrielles voire même des générateurs électriques turbo-gaz de grosse puissance.

Les machines à absorption sont des systèmes connus et couramment utilisés. Ils utilisent deux fluides : un réfrigérant et un absorbant. On peut notamment citer les couples de fluide suivants : H₂O/LiBr et NH_{3/}H₂O.

La machine à absorption comporte plusieurs échangeurs thermiques :
- l'absorbeur où la vapeur du réfrigérant est absorbée dans la solution pauvre par une réaction exothermique à basse pression,
- le générateur où la vapeur réfrigérant est générée à partir de la solution riche par une réaction endothermique à haute pression.

L'efficacité du système à absorption dépend de plusieurs paramètres. En particulier, les transferts de masse et de chaleur doivent être maximisés.

Des mécanismes d'écoulement à films ruisselants le long d'un échangeur (à plaque ou tube) sont ainsi couramment utilisés pour pouvoir contrôler les écoulements. Par exemple, la thèse de Delphine Triché intitulée « Étude numérique et expérimentale des transferts couplés de masse et de chaleur dans l'absorbeur d'une machine à absorption ammoniac-eau », Université Grenoble Alpes, 2016, décrit l'utilisation d'échangeur à plaques pour un absorbeur et un générateur d'une machine à absorption NH₃/H₂O. Pour l'absorbeur, la solution pauvre en NH₃ est distribuée le long des plaques dans le but de former des films ruisselants. La vapeur rentre dans l'absorbeur pour ensuite être absorbée tout le long de l'échangeur à travers une réaction exothermique dont la chaleur est transférée au fluide caloporteur circulant en contre-courant.

Dans le document EP 3 885 672 A1, la technologie d'échangeur à films ruisselants a été utilisée pour combiner dans un seul composant la génération de vapeur d'ammoniac et sa rectification. La rectification permet d'améliorer la qualité du réfrigérant en éliminant la majeure partie de l'absorbant contenu dans la phase gazeuse.

Cependant, même avec de tels dispositifs, les efficacités de transferts de masse et de chaleur lors des processus d'absorption et de désorption sont toujours insuffisantes, ce qui diminue la performance globale du cycle.

Dans la littérature, les composants utilisés dans les machines à absorption NH₃/H₂O sont généralement en inox afin d'éviter des problèmes de corrosion. Cependant, ce choix de matériau a des inconvénients : l'inox n'est pas un bon conducteur thermique, et, par rapports à d'autres métaux, il est plus lourd et plus coûteux.

Ainsi, il est parfois remplacé par de l'aluminium. Contrairement à l'inox, l'aluminium a une bonne conductivité thermique et une faible densité. Il aussi plus facile à mettre en forme et moins coûteux. En revanche, pour pouvoir être utilisé en milieu NH₃/H₂O, l'aluminium doit être traité pour éviter des problèmes de corrosion.

Deux principales techniques permettent, actuellement, de former des revêtements anticorrosion organiques pour la protection de l'aluminium.

Dans la première technique, dite de « laquage » ou de « peinture », l'aluminium est mis en contact avec une solution contenant une résine qui sera polymérisée en étuve, formant ainsi un vernis ou une peinture. Les résines les plus couramment utilisées sont les polyesters, les époxydes, les acryliques et les résines fluorées (de type PVDF). La tenue de ce revêtement peut être facilitée par l'application d'une couche primaire (polyester ou époxyde) entre le métal et la couche supérieure. De manière générale, cette technique permet de traiter rapidement de grande quantité de métal tout en assurant une protection efficace. En revanche, l'épaisseur déposée de polymère est très importante et est préférentiellement utilisé pour des surfaces planes (bandes d'aluminium par exemple).

À titre d'exemple, le brevet EP1242193 A1 décrit une méthode de laquage à échelle industrielle permettant de traiter 25m de bandes métallique par minute. Les bandes peuvent être en aluminium par exemple. Le procédé consiste à réaliser, dans un premier temps, un prétraitement puis le dépôt de du revêtement. Le prétraitement peut consister à déposer un polymère, une résine, des thiols, des silanes. Le dépôt obtenu a l'issu du prétraitement une épaisseur variant entre 0,1 et 50 µm. Le revêtement déposé a, quant à lui, une épaisseur entre 5 et 1000 µm. Un revêtement en PVC plastisol peut avoir une épaisseur entre 100 et 300µm. Cependant, ces épaisseurs de revêtements sont très élevées et ne sont pas compatibles avec toutes les technologies.

La seconde technique consiste à amorcer la polymérisation d'un monomère dans une solution où le métal à traiter est immergé. Le polymère se forme alors directement sur le métal. Trois familles de monomères sont principalement utilisées : les monomères vinyliques, les monomères phénoliques et plus récemment les monomères permettant de créer des polymères conducteurs tels que l'aniline ou le pyrrole.

Par exemple, dans le document US 2008/0272341 A1, les métaux sont protégés de la corrosion par un procédé comportant les étapes suivantes :
- appliquer sur la surface à protéger une formulation comprenant une résine durcissable par rayonnement et un agent anticorrosion,
- exposer la formulation à un rayonnement pour obtenir un revêtement anticorrosion.

Le revêtement anticorrosion a une épaisseur comprise entre 5 et 200 µm.

Les épaisseurs de revêtement sont généralement mieux contrôlées et peuvent être plus réduites qu'avec le laquage. Néanmoins, les propriétés anti-corrosion diminuent lorsque la couche de polymère est plus fine. JP H06 123577 A divulgue un échangeur de chaleur utilisé dans les climatiseurs ou les réfrigérateurs conventionnels dans lesquels la surface côté air de l'échangeur de chaleur est hydrophile pour empêcher les gouttelettes d'eau d'adhérer à la surface, réduisant ainsi la capacité de refroidissement en raison d'une résistance accrue à l'écoulement de l'air. Un revêtement à forte adhérence élevée est fourni tout en rendant la surface de transfert de chaleur côté air d'un échangeur de chaleur uniformément hydrophile.

### EXPOSÉ DE L'INVENTION

Un but de la présente invention est de proposer un échangeur thermique ayant un revêtement qui résiste à la corrosion en milieu ammoniaqué, même à des températures et pressions élevées (températures supérieures à 100°C et pressions supérieures à 30 bar), et présentant une épaisseur compatible avec son fonctionnement.

Pour cela, la présente invention propose un échangeur thermique d'une machine à absorption, tel que défini dans la revendication 1, comprenant une paroi métallique recouverte par une couche d'oxyde métallique, destinée à être en contact avec un fluide de travail circulant dans l'échangeur thermique,
la couche d'oxyde métallique de la paroi métallique étant recouverte par un revêtement comprenant :
- une couche d'accroche liée de manière covalente à la couche d'oxyde métallique, la couche d'accroche étant une couche d'alcoxysilane ayant une chaîne carbonée d'au moins 4 atomes de carbone ou une couche d'acétoxysilane ayant une chaîne carbonée d'au moins 4 atomes de carbone,
- une couche de polymère disposée entre les chaînes carbonées de la couche d'accroche, le polymère étant du polyméthacrylate (PMMA), du Polychlorure de vinyle (PVC) ou une polycaprolactone.

L'invention se distingue fondamentalement de l'art antérieur par le revêtement bicouche formé de :
- une couche d'accroche ayant une moyenne chaine carbonée (au moins 4 atomes de carbone) voire une longue chaine carbonée (au moins 10 atomes de carbone), et
- une couche de polymère (PVC, PMMA ou polycaprolactone), la couche de polymère étant imbriquée dans les chaînes carbonées de la couche d'accroche.

Avantageusement, l'échangeur thermique est un évaporateur, un absorbeur, un générateur, un rectifieur ou un condenseur.

Avantageusement, la couche de polymère comporte en outre des charges minérales, par exemple du nitrure de bore hexagonal, du graphène ou du graphite. Ceci augmente la conductivité thermique du revêtement.

Avantageusement, la paroi métallique est en acier, en acier inoxydable, en or, en argent, en cuivre ou en aluminium.

Par exemple, pour des applications stationnaires, on pourra choisir l'acier inoxydable.

Pour des applications mobiles, on pourra choisir l'aluminium qui est léger et un très bon conducteur thermique. L'aluminium peut présenter des défauts de surface puisque le revêtement les couvrira.

Avantageusement, la couche d'accroche est une couche d'alcoxysilane ayant une chaine carbonée ayant une chaine carbonée d'au moins 10 atomes de carbone ou une couche d'acétoxysilane ayant une chaine carbonée d'au moins 10 atomes de carbone. Avantageusement, les acétoxysilanes sont moins sensibles à l'eau que les alcoxysilanes mais demeurent suffisamment réactifs.

Avantageusement, la couche d'accroche est une couche d'hexadecyltriacétoxysilane ou d'hexadecyltriméthoxysilane.

Avantageusement, le revêtement a une épaisseur comprise entre 3 µm et 10 µm, et de préférence entre 3 µm et 5 µm.

Un tel échangeur présente de nombreux avantages :
- les propriétés anti-corrosion sont obtenues avec des revêtements d'une épaisseur inférieure à 10 µm, voire inférieure à 5 µm,
- la faible épaisseur du revêtement conjuguée à sa composition spécifique limite l'effet de barrière thermique crée par la présence de cette couche polymère ; dans certains cas la diffusivité thermique de l'échantillon est même augmentée.
- la performance globale du cycle est améliorée par rapport aux dispositifs de l'art antérieur.

L'invention concerne également une machine à absorption comprenant un ou plusieurs échangeurs thermiques tels que définis précédemment.

L'invention concerne également un procédé de traitement de surface d'un échangeur thermique, tel que défini dans la revendication 9, comprenant les étapes suivantes :
i) fournir un échangeur thermique ayant une paroi métallique recouverte par une couche d'oxyde métallique, destinée à être en contact avec un fluide circulant dans l'échangeur thermique,
ii) avantageusement, dégraisser la couche d'oxyde métallique de la paroi métallique,
iii) former un revêtement sur la couche d'oxyde métallique de la paroi métallique selon les sous-étapes a) et b) suivantes :
   a) mettre en contact la couche d'oxyde métallique de la paroi métallique avec une première solution comprenant un premier solvant organique et un alcoxysilane ayant une chaîne carbonée ayant au moins 4 atomes de carbone ou un acétoxysilane ayant au moins 4 atomes de carbone, moyennant quoi on forme une couche d'accroche liée de manière covalente à la couche d'oxyde métallique de la paroi métallique,
   b) mettre en contact la couche d'accroche obtenue à l'étape a) avec une deuxième solution comprenant un deuxième solvant organique, un polymère choisi parmi le PVC, le PMMA ou une polycaprolactone, et éventuellement des charges minérales, par exemple du nitrure de bore hexagonal, moyennant quoi on forme une couche de polymère disposée entre les chaînes carbonées de la couche d'accroche.

Avantageusement, la première solution est une solution comprenant l'hexadécyltriméthoxysilane ou l'hexadécyltriacétoxysilane et le premier solvant est un alcool, de préférence de l'éthanol ou de l'isopropanol.

Avantageusement, le deuxième solvant est un solvant halogéné, de préférence un solvant chloré, tel que le dichlorométhane. On pourra également choisir du cyclohexanone qui est un solvant moins volatil que le dichorométhane qui est donc plus facile à mettre en oeuvre.

Avantageusement, la sous-étape a) est réalisée dans une atmosphère ammoniaquée.

Le procédé présente de nombreux avantages :
- être simple à mettre en oeuvre (par voie liquide),
- être adapté à de nombreuses géométries de pièces, contrairement au laquage, et donc aisément transférable à l'échelle industrielle.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
La figure 1 représente de manière schématique le fonctionnement d'une machine à absorption selon un mode de réalisation particulier de l'invention.
La figure 2 représente de manière schématique et en coupe la paroi d'un échangeur thermique recouverte par un revêtement en contact avec un fluide de travail d'une part et par un fluide caloporteur d'autre part, selon un mode de réalisation particulier de l'invention.
La figure 3 représente de manière schématique et en coupe la paroi d'un échangeur thermique recouverte par une couche d'accroche, selon un mode de réalisation particulier de l'invention.
La figure 4 représente de manière schématique et en coupe l'immersion d'une paroi recouverte par une couche d'accroche dans une solution contenant un solvant et un polymère, selon un mode de réalisation particulier de l'invention.
La figure 5 représente de manière schématique et en coupe la paroi d'un échangeur thermique recouverte par un revêtement comprenant une couche d'accroche liée de manière covalente à la paroi métallique et une couche de polymère disposée entre les chaînes carbonées de la couche d'accroche, selon un mode de réalisation particulier de l'invention.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

L'invention concerne particulièrement les échangeurs thermiques d'une machine à absorption, notamment les échangeurs à films ruisselants, comme le générateur, le rectifieur, le condenseur, l'absorbeur et l'évaporateur.

Néanmoins, l'invention est également transposable aux domaines suivants :
- à la production de froid à partir de sources de chaleur à moyenne et basse températures (entre 30°C à 100°C) : rejets thermiques par des procédés industriels, solaire thermique, biomasse, géothermie, turbines à gaz, réseaux de chaleur;
- au transport sur moteurs à essence, diesel et turbine à gaz, transport maritime ;
- aux pompes à chaleur par machine à absorption ;
- aux échangeurs de type bouilleur.

Cette invention est également intéressante pour le stockage de l'ammoniaque : en effet ce composant chimique est un candidat pour le transport de l'hydrogène.

L'invention est particulièrement intéressante pour les systèmes à hautes températures comme les caloducs ('Loop Heat Pipe').

L'échangeur thermique 100 est, de préférence, un échangeur diphasique. Par la suite on décrira, plus particulièrement, un système thermique à cycle à absorption fonctionnant avec le couple de fluides de travail NH₃/H₂O, mais il pourrait également s'agir du couple H₂O/LiBr.

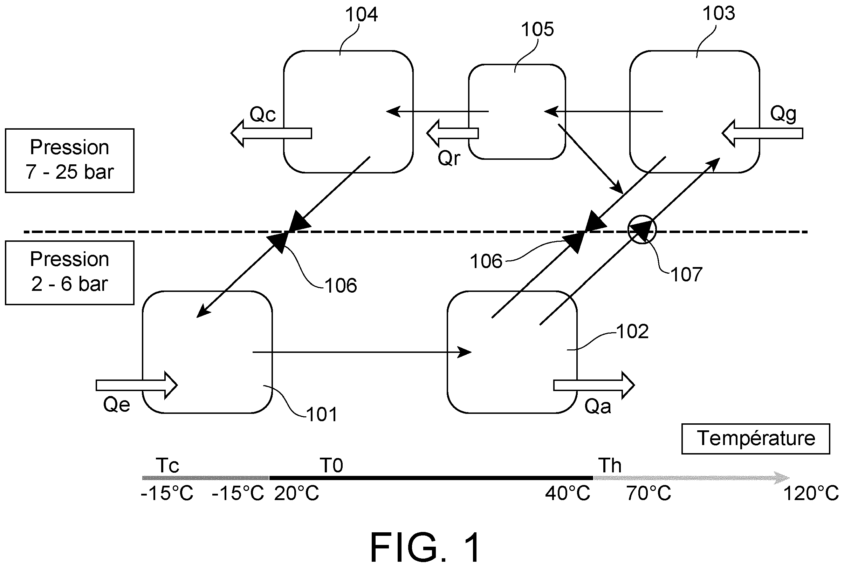

Nous allons maintenant décrire plus en détail une machine à absorption en faisant référence à la figure 1. La machine à absorption comprend quatre échangeurs thermiques 100 principaux (échangeurs de chaleur et de masse) : l'évaporateur 101, l'absorbeur 102, le générateur 103 et le condenseur 104 (figure 1). Un rectifieur 105 peut être ajouté afin d'améliorer les performances de la machine.

Des valves d'expansion 106 et/ou des pompes 107 peuvent également être utilisées pour réguler la pression dans chaque échangeur thermique et dans les tuyaux du système. La machine à absorption peut comprendre également des vannes d'expansion et/ou des pompes

Le réfrigérant (ici de l'ammoniac presque pur) en phase liquide pénètre dans l'évaporateur 101, où un fluide caloporteur froid circule. Le réfrigérant prend la chaleur de la source froide pour s'évaporer, ce qui induit la production de froid de la machine d'absorption (Qe). Dans ce composant, la pression est faible et un apport de chaleur à basse température est nécessaire pour permettre l'évaporation du frigorigène.

L'absorbeur 102 est configuré pour condenser la vapeur de fluide frigorigène issue de l'évaporateur. À son entrée, l'absorbant, solution composée d'eau et d'une faible fraction de réfrigérant, est pompé et distribué le long de l'absorbeur. La solution faible absorbe la vapeur de réfrigérant qui provient de l'évaporateur 101 et devient une solution enrichie, proche de sa condition saturée. La solution riche va au générateur 103. Le processus d'absorption se produit à basse pression, libérant une quantité de chaleur (Qa) dans l'air ambiant (ou dans un circuit de refroidissement).

L'absorbeur 102 est connecté fluidiquement à l'évaporateur 101 et au générateur 103.

Le générateur 103 est configuré pour vaporiser le fluide frigorigène. La solution riche provenant de l'absorbeur 102 est chauffée par un fluide caloporteur à haute température qui traverse le générateur. Grâce à cette chaleur, la solution riche désorbe la vapeur de frigorigène, devient à nouveau une solution faible, et retourne à l'absorbeur 102. Le processus de désorption a lieu à haute pression, et requiert une quantité de chaleur (Qg). La vapeur de frigorigène est ensuite acheminée vers le condenseur 104, de préférence via le rectifieur 105.

Le générateur 103 est en connexion fluidique avec le condenseur 104.

Le condenseur 104 est configuré pour condenser la vapeur de fluide frigorigène. La vapeur de réfrigérant générée est refroidie par l'air ambiant ou par un fluide externe pour se condenser et devenir à nouveau liquide. Le frigorigène liquide passe par une vanne de dilatation 106 pour diminuer sa pression avant de pénétrer dans l'évaporateur 101. La condensation nécessite une haute pression et libère une quantité de chaleur (Qc).

Avantageusement, un rectifieur 105 est positionné entre le générateur 103 et le condenseur 104. Le rectifieur 105 permet de purifier la vapeur de fluide frigorigène avant son arrivée dans le condenseur 104. En particulier pour les machines à absorption ammoniac eau, l'utilisation d'un rectifieur 105 permet d'éliminer une partie des traces de vapeur d'eau restant dans la vapeur d'ammoniac à la sortie du générateur 103. La condensation partielle de la vapeur d'eau restante dans la vapeur d'ammoniac se fait à haute pression et libère une quantité de chaleur (Qr). Les condensats retournent dans la solution faible tandis que la vapeur purifiée se dirige vers le condenseur 104.

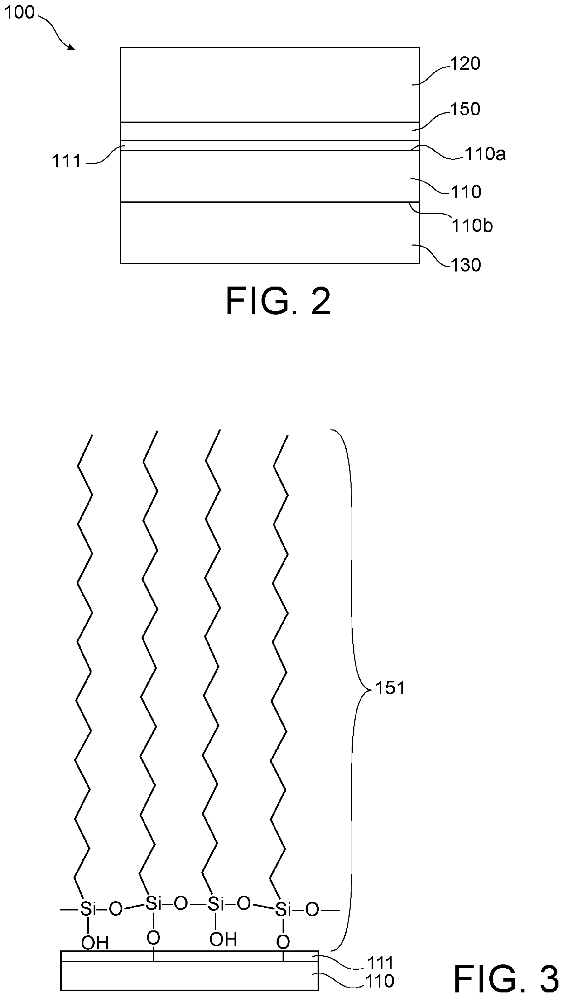

Les échangeurs thermiques 100 de la machine à absorption comprennent au moins une paroi métallique 110 (figure 2).

La paroi métallique 110 peut être en acier, en acier inoxydable, en argent, en or, en cuivre ou en aluminium. Notamment, on choisira de l'aluminium, de l'acier ou de l'acier inoxydable.

La paroi métallique 110 a par exemple une épaisseur de l'ordre du millimètre. L'épaisseur est choisie en fonction des contraintes mécaniques.

La paroi métallique 110 comprend une première surface 110a et une deuxième surface 110b (figure 2). La première surface 110a est destinée à être en contact avec le fluide de travail 120. La deuxième surface 110b peut être destinée à être en contact avec un fluide caloporteur 130.

La première surface 110a est recouverte par une couche d'oxyde 111. La deuxième surface 110b peut également être recouverte par une couche d'oxyde (non représentée sur les figures).

La couche d'oxyde 111 de la première surface 110a de la paroi 110 est recouverte, partiellement voire totalement, par le revêtement 150 (figure 2). La deuxième surface 110b peut également être recouverte par un revêtement.

La couche d'oxyde a, par exemple, une épaisseur comprise entre 1 nm et 5 nm, voire entre 1 nm et 10 nm. Elle a, par exemple, une épaisseur de 3 nm.

Avant de former le revêtement 150 sur la paroi 110, on réalise, avantageusement, un traitement pour dégraisser et/ou décaper la paroi métallique. Cette étape permet de retirer les corps gras (par exemple le silicone) pouvant être présents à la surface de la paroi de l'échangeur thermique et/ou d'avoir un maximum de groupement OH à la surface de la paroi et ainsi d'améliorer la formation de liaisons covalentes entre la couche d'accroche et le revêtement 150. Par exemple, pour un échangeur en acier inoxydable on pourra utiliser une solution piranha. On peut également utiliser un solvant organique, notamment un solvant chloré tel que le trichloroéthylène. Avantageusement, pour une surface en aluminium, on pourra réaliser un nettoyage et un dégraissage avec de l'acétone pour éliminer toute trace d'impureté à la surface.

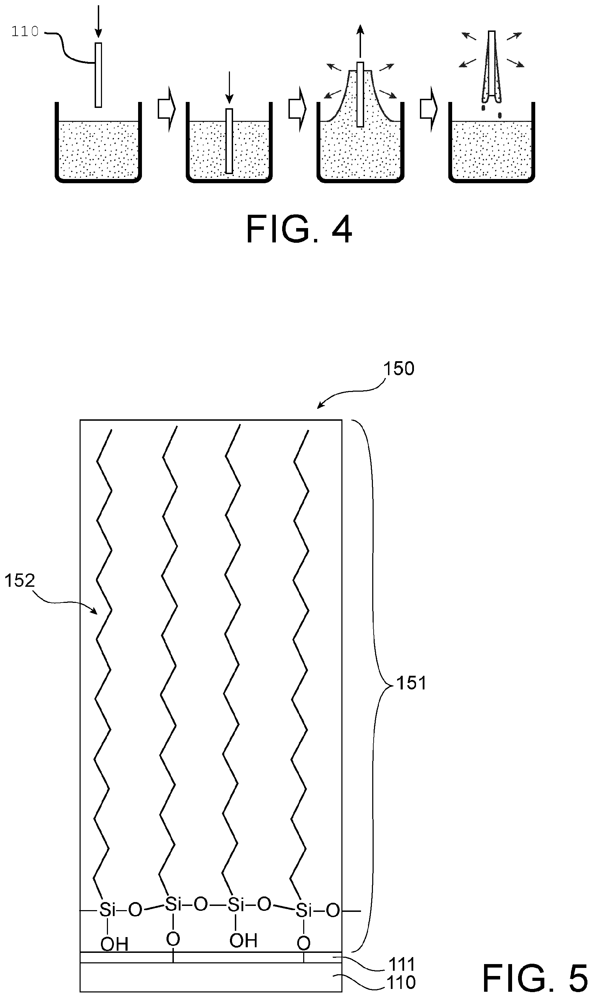

Nous allons maintenant décrire plus en détail le procédé de fabrication du revêtement sur la paroi métallique. Le procédé comprend les sous-étapes a) et b) suivantes :
a) mettre en contact la paroi métallique 110, et plus particulièrement, la couche d'oxyde 111 présente sur la première surface 110a de la première paroi métallique 110, avec une première solution comprenant un premier solvant organique et un alcoxysilane ayant une chaîne carbonée ayant au moins 4 atomes de carbone ou un acétoxysilane ayant au moins 4 atomes de carbone, moyennant quoi on forme une couche d'accroche 151 liée de manière covalente à la couche d'oxyde métallique de la paroi métallique (figure 3),
b) mettre en contact la couche d'accroche 151 obtenue à l'étape a) avec une deuxième solution comprenant un polymère et un deuxième solvant organique, et éventuellement des charges minérales, par exemple du nitrure de bore hexagonal (figure 4), moyennant quoi on forme une couche de polymère 152 disposée entre les chaînes carbonées de la couche d'accroche 151 et on obtient ainsi le revêtement 150 (figure 5).

La première solution comprend, d'une part, un premier solvant organique et, d'autre part, une molécule destinée à être accrochée sur la couche d'oxyde 111 de la paroi métallique 110. Par exemple, dans le cas d'une paroi métallique en aluminium, la molécule formera des liaisons covalentes avec les groupements AI(OH) de la couche d'alumine. La première couche de revêtement formée est une couche hydrophobe.

Selon une première variante de réalisation, la molécule servant à réaliser le greffage chimique est un alcoxysilane ayant une chaîne carbonée ayant au moins 4 atomes de carbone, et de préférence au moins 6 atomes de carbone, et encore plus préférentiellement au moins 10 atomes de carbone.

Selon une seconde variante de réalisation, la molécule est un acétoxysilane ayant au moins 4 atomes de carbone, de préférence au moins 6 atomes de carbone, et encore plus préférentiellement au moins 10 atomes de carbone.

Selon ces variantes de réalisation, avantageusement la chaîne carbonée est une chaîne alkyle linéaire et non substituée.

De préférence, on choisira un alcoxysilane ou un acétoxysilane suffisamment réactif, peu toxique et/ou ne pouvant pas conduire à la formation de composés toxiques

Par exemple, on évitera les composés chlorés pour éviter de libérer des molécules de HCl.

En particulier, l'acétoxysilane peut avoir la formule (I) suivante :
RSi(OAc)x(OR)₃-X avec R= C₁₆H₃₃ à octyl et x= 1 à 3 , R est Méthyl ou éthyl

De préférence, on choisira le HDTMS ou le hexadécyltriacétoxysilane. Ce composé est obtenu par réaction de l'hexadecyltrichlorosilane sur de l'acétate de sodium anhydre. Avantageusement, par rapport à l'hexadécyltrimethoxysilane, ce composé ne libère pas trois molécules de MeOH par molécule de silane greffée, mais de l'acide acétique moins toxique pour la santé des opérateurs.

Le solvant de la première solution est, avantageusement, un solvant polaire. Ceci permet d'orienter correctement les chaînes carbonées lors de la mise en contact de la molécule avec la paroi métallique et de favoriser la croissance de la couche d'accroche. On évite ainsi la formation de micelles. Le solvant est, de préférence, un alcool. On choisira, par exemple, de l'éthanol ou de l'isopropanol. Un solvant chloré tel que le dichorométhane pourrait également être utilisé.

Il est également possible d'utiliser la Méthyléthylcétone (MEK).

On choisira, avantageusement, un solvant non toxique. Le solvant est, avantageusement, assez polaire pour libérer l'accès des sites à la surface de la pièce et/ou assez dégraissant pour enlever les résidus organiques hydrophobes qui sont déposés en surface. Par exemple, dans le cas d'une pièce en aluminium, on choisira un solvant pouvant libérer les aluminols de surface.

Selon un mode de réalisation particulier, la première solution comprend un mélange d'un premier solvant et d'un solvant additionnel. Par exemple, il s'agit d'un mélange éthanol/MEK.

La première solution comprend, de préférence, de 0,25% à 10% massique (par exemple de 0,25% à 1% massique), et de préférence de 0,5% à 10% massique (par exemple de 0,5% à 1% massique) de molécules d'accroche (i.e. d'alcoxyislane ou d'acétoxysilane). Ceci permet d'obtenir une couche d'accroche homogène et présentant une bonne couverture de la couche d'oxyde 111 présente sur la paroi métallique 110.

La première sous-étape a) est réalisée à une température comprise entre 10 et 50°C, de préférence, entre 15 et 30°C. Elle pourra, avantageusement, être réalisée à température ambiante (typiquement 20°C).

La durée de l'étape peut aller de 1min à 48h, de préférence de 5min à 12h. Par exemple, on choisira une durée de 2h. La durée sera choisie en fonction de la température, de la concentration en réactifs ainsi que de la présence ou non d'une atmosphère à effet catalytique.

Pour accélérer cette étape d'accroche, elle peut être réalisée dans une atmosphère légèrement ammoniaquée. Par exemple, on utilisera un dessiccateur contenant une solution aqueuse à 2,5% massique d'ammoniaque). La présence de vapeurs d'ammoniac catalyse la réaction.

La mise en contact de la surface avec la première solution est, par exemple, réalisée par trempage de la paroi 110 dans la première solution.

Avantageusement, avant de mettre en oeuvre la sous-étape b), on réalise une étape de rinçage pour retirer l'excédent de molécules non greffées à la surface de la paroi, puis éventuellement une étape de séchage. Par exemple, les surfaces sont rincées avec de l'éthanol ou de la MEK, ou encore un de leurs mélanges.

La deuxième solution comprend un polymère organique et un deuxième solvant organique. Le polymère est, par exmeple, du polyméthyl-méthacrylate (PMMA) ou du poly(chlorure de vinyle) (PVC). En fonction des applications, il pourrait également s'agir de polycaprolactone. Ces polymères ont de bonnes propriétés anticorrosion. Par exemple, le polymère est du poly(chlorure de vinyle) avec une masse molaire Mw entre 25000 et 100000, par exemple Mw=43000. Le poids moléculaire est assez faible (25000-100000) pour disposer de solutions peu visqueuses. La deuxième solution peut être obtenue en dissolvant le polymère dans le deuxième solvant organique. Cette dissolution est effectuée, par exemple, à l'aide d'un agitateur magnétique à 200 tours/min (rpm) pendant 30 min. Le deuxième solvant organique peut être du cyclohexanone, du dichlorométhane ou de la MEK. Avantageusement, pour le PMAA, on choisira un solvant halogéné comme le dichlorométhane pour faciliter la dissolution en solution.

Avantageusement, le solvant permet d'éviter la formation de film de surface à la surface de la machine de dépôt utilisée pour mettre en oeuvre la sous-étape b), par exemple une machine d'enduction par trempage ('dip-coater').

La deuxième solution contient, de préférence, entre 1% et 5% massique de polymère. En dessous d'une telle concentration, on pourrait avoir un faible pouvoir couvrant alors qu'au-dessus d'une telle concentration, le séchage serait long et inhomogène.

La deuxième solution peut contenir en outre des charges (ou particules) minérales. On choisira, avantageusement, des charges de forme plate, notamment pour des revêtements de faibles épaisseurs. Par exemple, les charges minérales peuvent être choisies parmi le nitrure de bore hexagonal (hBN), le graphite et le graphène. Les charge hBN étant conductrices thermiquement, les propriétés thermiques de la paroi de l'échangeur restent élevées, même avec le revêtement polymère.

De préférence, le rapport massique charges minérales / polymère est compris entre 5 et 20%, et de préférence de 5% à 10%. De tels rapports massiques conduisent à l'obtention d'un pavage homogène des charges et d'une solution polymère/charges minérales stable dans le temps. Par exemple, pour le nitrure de bore hexagonal, des trous peuvent apparaître dans le revêtement si le rapport massique est inférieur. Au-dessus de 20%, on a un léger excès et une décantation des charges minérales.

Les charges minérales peuvent être dispersées par agitation magnétique, par exemple à 200 tours/min pendant 5 min puis par bain à ultrasons pendant 15 min.

La sous-étape b) peut être réalisée par une méthode de dépôt par trempage ('dip-coating'). Les pièces sont, par exemple, immergées dans la solution précédemment puis retirées à une vitesse comprise entre 30 mm/min et 60 mm/min.

Le revêtement ainsi obtenu est ensuite séché, par exemple en étuve pendant 20 min à 120°C. Il peut également être séché à l'air, par exemple dans le cas d'utilisation de dichlorométhane.

Le polymère est lié à la couche d'accroche via des interactions de type Van der Waals.

Il a été observé que les revêtements obtenus sont homogènes même sur des plaques non polies.

Les revêtements ont une épaisseur, par exemple comprise entre 3 µm et 10µm. De telles épaisseurs confèrent une protection efficace contre la corrosion en milieu ammoniaque et évite la présence de défauts. Avantageusement, l'épaisseur est inférieure à 5µm.

Le procédé peut être mis en oeuvre sur des échangeurs plats ou tubulaires. Le procédé peut être mis en oeuvre pour former un premier revêtement sur l'échangeur. Il peut également être mis en oeuvre pour régénérer un ancien revêtement. Il peut s'agir de recycler un échangeur ayant déjà servi, par exemple, en retirant l'ancien revêtement puis en formant un nouveau revêtement, identique ou différent, de l'ancien revêtement, sur l'échangeur.

### Exemples illustratifs et non limitatifs d'un mode de réalisation :

Des échantillons en aluminium sont nettoyés puis immergées dans 100mL d'éthanol contenant 0.55mL de HDTMS. Ils sont ensuite placés dans un dessiccateur contenant une solution composée 50 mL d'eau déminéralisée et de 5 mL d'ammoniaque à 29wt%. Après 48h les échantillons sont rincés puis séchés à l'air libre.

La solution de revêtement est préparée en dissolvant 5g de PVC (Mw=43000) dans 100 mL de cyclohexanone puis en y ajoutant 0,26g de nitrure de bore hexagonal commercialisé sous la référence AC6111 par la société Momentive Performance Materials.

En trempant les échantillons dans cette solution puis en les retirant à une vitesse de 60 mm/min, on obtient un dépôt de PVC de 3,7 µm (± 1 µm) sur la surface de l'échantillon.

Ces échantillons sont mis en contact avec une solution à 29wt% d'ammoniaque à 120°C et 30 bar pendant plus de 14 jours. A l'issu de cette expérience, on constate que les revêtements ont résisté.

De plus, la diffusivité thermique des échantillons est de 89 mm²/s contre environ 88,2 mm²/s pour une surface brute sans revêtement.

## Revendications

1. Échangeur thermique (100) pour une machine à absorption comprenant une paroi métallique (110) recouverte par une couche d'oxyde métallique (111), destinée à être en contact avec un fluide de travail (120) circulant dans l'échangeur thermique (100), la couche d'oxyde métallique (111) de la paroi métallique (110) étant recouverte par un revêtement (150) comprenant :
- une couche d'accroche (151) liée de manière covalente à la couche d'oxyde métallique (111), la couche d'accroche (151) étant une couche d'alcoxysilane ayant une chaîne carbonée d'au moins 4 atomes de carbone ou une couche d'acétoxysilane ayant une chaîne carbonée d'au moins 4 atomes de carbone,
- une couche de polymère (152) disposée entre les chaînes carbonées de la couche d'accroche (151), le polymère étant du PMMA, du PVC ou une polycaprolactone.

2. Échangeur thermique selon la revendication 1, l'échangeur thermique (100) étant un évaporateur, un absorbeur, un générateur, un rectifieur ou un condenseur.

3. Échangeur selon l'une quelconque des revendications précédentes, la couche de polymère (152) comportant en outre des charges minérales, par exemple du nitrure de bore hexagonal, du graphène ou du graphite.

4. Échangeur selon l'une quelconque des revendications précédentes, la paroi métallique (110) étant en acier, en acier inoxydable, en or, en argent, en cuivre ou en aluminium.

5. Échangeur selon l'une quelconque des revendications précédentes, la couche d'accroche (151) étant une couche d'alcoxysilane ayant une chaîne carbonée d'au moins 10 atomes de carbone ou une couche d'acétoxysilane ayant une chaîne carbonée d'au moins 10 atomes de carbone.

6. Échangeur selon l'une quelconque des revendications précédentes, la couche d'accroche (151) étant une couche d'hexadecyltriacétoxysilane ou l'hexadecyltriméthoxysilane.

7. Échangeur selon l'une quelconque des revendications précédentes, le revêtement (150) ayant une épaisseur comprise entre 3 µm et 10 µm, et de préférence entre 3 µm et 5 µm.

8. Machine à absorption comprenant un ou plusieurs échangeurs thermiques selon l'une quelconque des revendications 1 à 7.

9. Procédé de traitement de surface d'un échangeur thermique (100) comprenant les étapes suivantes :
i) fournir un échangeur thermique (100) ayant une paroi métallique (110) recouverte par une couche d'oxyde métallique (111), destinée à être en contact avec un fluide (120) circulant dans l'échangeur thermique (100),
ii) avantageusement, dégraisser la couche d'oxyde métallique (111) de la paroi métallique (110),
iii) former un revêtement (150) sur la couche d'oxyde métallique (111) de la paroi métallique (110) selon les sous-étapes a) et b) suivantes :
a) mettre en contact la couche d'oxyde métallique (111) de la paroi métallique (110) avec une première solution comprenant un premier solvant organique et un alcoxysilane ayant une chaîne carbonée d'au moins 4 atomes de carbone ou un acétoxysilane ayant une chaîne carbonée d'au moins 4 atomes de carbone, moyennant quoi on forme une couche d'accroche (151) liée de manière covalente à la couche d'oxyde métallique (111) de la paroi métallique (110),
b) mettre en contact la couche d'accroche (151) obtenue à l'étape a) avec une deuxième solution comprenant un deuxième solvant organique, un polymère choisi parmi le PVC, le PMMA ou une polycaprolactone, et éventuellement des charges minérales, par exemple du nitrure de bore hexagonal, moyennant quoi on forme une couche de polymère (152) disposée entre les chaînes carbonées de la couche d'accroche (151).

10. Procédé selon la revendication précédente, la première solution étant une solution comprenant l'hexadécyltriméthoxysilane ou l'hexadécyltriacétoxysilane et le premier solvant étant un alcool, de préférence de l'éthanol ou de l'isopropanol.

11. Procédé selon l'une des revendications 9 et 10, le deuxième solvant étant un solvant halogéné, de préférence un solvant chloré, tel que du cyclohexanone ou le dichlorométhane.

12. Procédé selon l'une quelconque des revendications 9 à 11, la sous-étape a) étant réalisée dans une atmosphère ammoniaquée.

## Patentansprüche

1. Wärmetauscher (100) einer Absorptionsmaschine, der eine Metallwand (110) umfasst, die mit einer Metalloxidschicht (111) bedeckt und dazu bestimmt ist, mit einem im Wärmetauscher (100) zirkulierenden Arbeitsfluid (120) in Kontakt zu stehen,
wobei die Metalloxidschicht (111) der Metallwand (110) mit einer Beschichtung (150) bedeckt ist, die Folgendes umfasst:
- eine Haftschicht (151), die kovalent mit der Metalloxidschicht (111) verbunden ist, wobei die Haftschicht (151) eine Alkoxysilanschicht, die eine Kohlenstoffkette von mindestens 4 Kohlenstoffatomen aufweist, oder eine Acetoxysilanschicht ist, die eine Kohlenstoffkette von mindestens 4 Kohlenstoffatomen aufweist,
- eine Polymerschicht (152), die zwischen den Kohlenstoffketten der Haftschicht (151) angeordnet ist, wobei das Polymer PMMA, PVC oder Polycaprolacton ist.

2. Wärmetauscher nach Anspruch 1, wobei der Wärmetauscher (100) ein Verdampfer, ein Absorber, ein Generator, ein Gleichrichter oder ein Kondensator ist.

3. Tauscher nach einem der vorhergehenden Ansprüche, wobei die Polymerschicht (152) ferner mineralische Füllstoffe, zum Beispiel hexagonales Bornitrid, Graphen oder Graphit, umfasst.

4. Tauscher nach einem der vorhergehenden Ansprüche, wobei die Metallwand (110) aus Stahl, Edelstahl, Gold, Silber, Kupfer oder Aluminium besteht.

5. Tauscher nach einem der vorhergehenden Ansprüche, wobei die Haftschicht (151) eine Alkoxysilanschicht, die eine Kohlenstoffkette von mindestens 10 Kohlenstoffatomen aufweist, oder eine Acetoxysilanschicht ist, die eine Kohlenstoffkette von mindestens 10 Kohlenstoffatomen aufweist.

6. Tauscher nach einem der vorhergehenden Ansprüche, wobei die Haftschicht (151) eine Schicht aus Hexadecyltriacetoxysilan oder Hexadecyltrimethoxysilan ist.

7. Tauscher nach einem der vorhergehenden Ansprüche, wobei die Beschichtung (150) eine Dicke zwischen 3 µm und 10 µm und vorzugsweise zwischen 3 µm und 5 µm aufweist.

8. Absorptionsmaschine, die einen oder mehrere Wärmetauscher nach einem der Ansprüche 1 bis 7 umfasst.

9. Verfahren zum Behandeln der Oberfläche eines Wärmetauschers (100), das die folgenden Schritte umfasst:
i) Bereitstellen eines Wärmetauschers (100), der eine Metallwand (110) aufweist, die mit einer Metalloxidschicht (111) bedeckt und dazu bestimmt ist, mit einem im Wärmetauscher (100) zirkulierenden Fluid (120) in Kontakt zu stehen,
ii) vorteilhafterweise, Entfetten der Metalloxidschicht (111) der Metallwand (110),
iii) Bilden einer Beschichtung (150) auf der Metalloxidschicht (111) der Metallwand (110) gemäß den folgenden Unterschritten a) und b):
a) Inkontaktbringen der Metalloxidschicht (111) der Metallwand (110) mit einer ersten Lösung, die ein erstes organisches Lösungsmittel und ein Alkoxysilan, das eine Kohlenstoffkette von mindestens 4 Kohlenstoffatomen aufweist, oder ein Acetoxylan umfasst, das eine Kohlenstoffkette von mindestens 4 Kohlenstoffatomen aufweist, wodurch eine Haftschicht (151) gebildet wird, die kovalent mit der Metalloxidschicht (111) der Metallwand (110) verbunden ist,
b) Inkontaktbringen der in Schritt a) erhaltenen Haftschicht (151) mit einer zweiten Lösung, die ein zweites organisches Lösungsmittel, ein Polymer, das aus PVC, PMMA oder einem Polycaprolacton ausgewählt wird, und optional mineralische Füllstoffe, zum Beispiel hexagonales Bornitrid, umfasst, wodurch zwischen den Kohlenstoffketten der Haftschicht (151) eine Polymerschicht (152) gebildet wird.

10. Verfahren nach dem vorhergehenden Anspruch, wobei die erste Lösung eine Lösung ist, die Hexadecyltrimethoxysilan oder Hexadecyltriacetoxysilan umfasst, und das erste Lösungsmittel ein Alkohol, vorzugsweise Ethanol oder Isopropanol, ist.

11. Verfahren nach einem der Ansprüche 9 und 10, wobei das zweite Lösungsmittel ein halogeniertes Lösungsmittel, vorzugsweise ein chloriertes Lösungsmittel, wie Cyclohexanon oder Dichlormethan, ist.

12. Verfahren nach einem der Ansprüche 9 bis 11, wobei der Unterschritt a) in einer Ammoniakatmosphäre durchgeführt wird.

## Claims

1. Heat exchanger (100) for an absorption machine comprising a metal wall (110) coated with a metal oxide layer (111), intended to be in contact with a working fluid (120) circulating in the heat exchanger (100), the metal oxide layer (111) of the metal wall (110) being coated with a coating (150) comprising:
- an adhesion layer (151) bonded covalently to the metal oxide layer (111), the adhesion layer (151) being a layer of alkoxysilane having a carbon chain of at least 4 carbon atoms or a layer of acetoxysilane having a carbon chain of at least 4 carbon atoms,
- a polymer layer (152) disposed between the carbon chains of the adhesion layer (151), the polymer being PMMA, PVC or a polycaprolactone.

2. Heat exchanger according to claim 1, the heat exchanger (100) being an evaporator, an absorber, a generator, a rectifier or a condenser.

3. Exchanger according to any one of the preceding claims, the polymer layer (152) furthermore including mineral fillers, for example hexagonal boron nitride, graphene or graphite.

4. Exchanger according to any one of the preceding claims, the metal wall (110) being made of steel, stainless steel, gold, silver, copper or aluminum.

5. Exchanger according to any one of the preceding claims, the adhesion layer (151) being a layer of alkoxysilane having a carbon chain of at least 10 carbon atoms or a layer of acetoxysilane having a carbon chain of at least 10 carbon atoms.

6. Exchanger according to any one of the preceding claims, the adhesion layer (151) being a layer of hexadecyltriacetoxysilane or hexadecyltrimethoxysilane.

7. Exchanger according to any one of the preceding claims, the coating (150) having a thickness between 3 µm and 10 µm, and preferably between 3 µm and 5 µm.

8. Absorption machine comprising one or more heat exchangers according to any one of claims 1 to 7.

9. Method for surface treatment of a heat exchanger (100) comprising the following steps:
i) providing a heat exchanger (100) having a metal wall (110) coated with a metal oxide layer (111), intended to be in contact with a fluid (120) circulating in the heat exchanger (100),
ii) advantageously, degreasing the metal oxide layer (111) of the metal wall (110),
iii) forming a coating (150) on the metal oxide layer (111) of the metal wall (110) according to the following sub-steps a) and b):
a) contacting the metal oxide layer (111) of the metal wall (110) with a first solution comprising a first organic solvent and an alkoxysilane having a carbon chain of at least 4 carbon atoms or an acetoxysilane having a carbon chain of at least 4 carbon atoms, whereby an adhesion layer (151) bonded covalently to the metal oxide layer (111) of the metal wall (110) is formed,
b) contacting the adhesion layer (151) obtained in step a) with a second solution comprising a second organic solvent, a polymer chosen from PVC, PMMA or a polycaprolactone, and optionally mineral fillers, for example hexagonal boron nitride, whereby a polymer layer (152) disposed between the carbon chains of the adhesion layer (151) is formed.

10. Method according to the preceding claim, the first solution being a solution comprising hexadecyltrimethoxysilane or hexadecyltriacetoxysilane and the first solvent being an alcohol, preferably ethanol or isopropanol.

11. Method according to one of claims 9 and 10, the second solvent being a halogenated solvent, preferably a chlorinated solvent, such as cyclohexanone or dichloromethane.

12. Method according to any one of claims 9 to 11, the sub-step a) being carried out in an ammoniated atmosphere.
